# EUROPÄISCHE PATENTSCHRIFT

(11) **EP 1 783 464 B1**
(45) Veröffentlichungstag und Bekanntmachung des Hinweises auf die Patenterteilung: **17.01.2018**
(21) Anmeldenummer: 06020337.9
(22) Anmeldetag: 28.09.2006
(51) Int. Cl.: G01F 1/66

(54) **Clamp-on-Durchflussmessgerät**
Clamp-on flow measuring apparatus
Débitmètre à pince

(30) Priorität: 02.11.2005 DE 102005052550
(43) Veröffentlichungstag der Anmeldung: 09.05.2007
(73) Patentinhaber: Krohne AG, 4019 Basel (CH)
(72) Erfinder: Molennar, Marcel Meijlom, 3311 ZG Dordrecht (NL); Pors, Jan Teunis Aart, 3262 EK Oud-Beijerland (NL); Van den Berg, Jeroen, 3342 AE Hendrik Ido Ambacht (NL); Hogendoorn, Cornelis Johannes, 4261 CK Wijk en Aalburg (NL)
(74) Vertreter: Gesthuysen, Michael

(56) Entgegenhaltungen:
- EP-A- 1 396 707
- EP-A1- 0 036 658
- US-A- 4 948 552
- US-A- 5 131 278

## Beschreibung

Die Erfindung betrifft ein Clamp-on-Meßgerät, zur Anbringung auf einem Träger, mit wenigstens einem Meßwandler, einer Halteeinrichtung zur Halterung des Meßwandlers und einer Befestigungseinrichtung zur Befestigung der Halteeinrichtung an dem Träger.

Clamp-on-Meßgerät, wie Clamp-on-Durchflußmeßgeräte, wie im EP0036658 oder US4948552, zeichnen sich dadurch aus, daß sie besonders einfach eingesetzt werden können: Im Gegensatz zu anderen Durchflußmeßgeräten, die in bestehende Rohrleitungssysteme fest integriert werden müssen, indem sie ein Stück der Rohrleitung ersetzen, können Clamp-on-Durchflußmeßgeräte einfach von außen auf einen geeigneten Rohrabschnitt aufgesetzt werden. Dieser Rohrabschnitt, an dem das Clamp-on-Meßgerät angebracht ist, wird damit quasi zum Meßrohr, ohne daß ein eigenes Meßrohr in das Rohrleitungssystem eingesetzt werden muß. Dies macht die Verwendung von Clamp-on-Durchflußmeßgeräten einfach und kostengünstig.
Problematisch bei Clamp-on-Meßgeräten, wie Clamp-on-Ultraschalldurchflußmeßgeräten, ist jedoch die korrekte Anbringung des Meßgeräts an einer Rohrleitung, insbesondere hinsichtlich der korrekten Anordnung und Ausrichtung der Meßwandler, die bei einem Ultraschalldurchflußmeßgerät in der Regel durch zwei in Längsrichtung des Rohres im Abstand voneinander angeordnete Ultraschallwandler gebildet werden. Neben einer entsprechenden Problematik bei der ersten Anbringung des Clamp-on-Ultraschalldurchflußmeßgeräts auf dem Rohr ergibt sich das Problem, daß selbst bei korrekt angeordnetem und ausgerichteten Meßgerät dieser Zustand wieder verloren werden kann, wenn die Meßwandler, z. B. zu Wartungszwecken, vom Rohr entfernt werden müssen. Entsprechende Probleme treten bei anderen Clamp-on-Meßgeräten ebenfalls auf, wenn diese zu Wartungs- oder Reparaturzwecken vom Träger, auf dem sie befestigt sind, gelöst und danach auf diesem wieder angebracht werden müssen.

Damit ist es die Aufgabe der Erfindung, gemäß dem Anspruch 1, ein derartiges Clamp-on-Meßgerät anzugeben, das nach Befestigung an einem Träger auf einfache Weise zu Wartungs- oder Reparaturzwecken lösbar und dann wieder in der ursprünglichen Ausrichtung auf dem Träger befestigbar ist.
Ausgehend von dem eingangs beschriebenen Clamp-on-Meßgerät ist diese Aufgabe dadurch gelöst, dass die Halteeinrichtung auf der Befestigungseinrichtung aufsetzbar ist, und daß die Halteeinrichtung an der Befestigungseinrichtung derart befestigbar ist, daß die Halteeinrichtung in wenigstens einer vorbestimmten Richtung von dem Träger weg bzw. auf den Träger zu bewegbar und längs einer Schwenkachse verschwenkbar ist.
Erfindungsgemäß ist also vorgesehen, daß die Halteeinrichtung zwei Bewegungen durchführen kann, einerseits nämlich eine Bewegung weg von dem Träger, um die Halteeinrichtung von dem Träger zu lösen, und wieder zu auf den Träger, um die Halteeinrichtung wieder auf dem Träger zu befestigen, und andererseits eine Schwenkbewegung längs einer Schwenkachse. Insgesamt wird damit erreicht, daß die dem Träger zugewandte Seite der Halteeinrichtung, welche Seite gegebenenfalls im Betrieb des Clamp-on-Meßgeräts mit dem Träger in direktem Kontakt steht, zugänglich gemacht werden kann. Auf diese Weise können von der unteren Seite der Halteeinrichtung her Reparatur- und Wartungsarbeiten durchgeführt werden.

Gemäß der Erfindung ist dabei auch vorgesehen, daß die Halteeinrichtung und die Befestigungseinrichtung derart ausgebildet und angeordnet sind und der Meßwandler in der Halteeinrichtung derart gehalten ist, daß durch die Bewegung der Halteeinrichtung weg von dem Träger kombiniert mit der Schwenkbewegung der Halteeinrichtung um die Schwenkachse die zuvor dem Träger zugewandte Seite des Meßwandlers zugänglich wird. Bei einem Clamp-on-Ultraschalldurchflußmeßgerät kann auf diese Weise z. B. ein Ultraschallwandler mit einem Kontaktfluid versehen werden, um eine gute Leitung des Ultraschallsignals vom Ultraschallwandler in das Rohr und zurück zu gewährleisten.
Grundsätzlich kann die Schwenkachse unterschiedlich orientiert sein, insbesondere auch parallel zu der vorbestimmten Richtung der Bewegung von dem Träger weg verlaufen. Gemäß einer bevorzugten Weiterbildung der Erfindung ist jedoch vorgesehen, daß die Schwenkachse in einem Winkel zu der vorbestimmten Richtung verläuft, vorzugsweise nämlich senkrecht dazu und ganz besonders bevorzugt auch parallel zur Längsachse der Halteeinrichtung.
Die beiden zuvor genannten Bewegungen der Halteeinrichtung können auf verschiedene Weisen realisiert werden. Gemäß der Erfindung ist jedoch vorgesehen, daß die Halteeinrichtung und die Befestigungseinrichtung zueinander korrespondierende Einrichtungen aufweisen, um die Bewegung der Halteeinrichtung weg von dem Träger bzw. auf den Träger zu und die Schwenkbewegung der Halteeinrichtung um die Schwenkachse zu gewährleisten.

Gemäß der Erfindung ist dabei insbesondere vorgesehen, daß in der Halteeinrichtung bzw. der Befestigungseinrichtung eine in der vorbestimmten Richtung verlaufende Nut, die vom Träger radial nach außen verläuft, und in der Befestigungseinrichtung bzw. der Halteeinrichtung eine in die Nut eingreifende runde Nase vorgesehen sind, um die Bewegung der Halteeinrichtung weg von dem Träger bzw. auf den Träger zu und die Schwenkbewegung der Halteeinrichtung um die Schwenkachse zu gewährleisten. Mit anderen Worten ist entweder in der Halteeinrichtung oder der Befestigungseinrichtung eine Nut vorgesehen, in die eine in der Befestigungseinrichtung bzw. der Halteeinrichtung angebrachte Nase eingreift, so daß durch eine Bewegung der Nase in der Nut die Bewegungsrichtung der Halteeinrichtung weg vom Träger und auf den Träger zu definiert ist.
Grundsätzlich kann die Halteeinrichtung auf verschiedene Weisen am Träger befestigt sein. Gemäß einer bevorzugten Weiterbildung der Erfindung ist jedoch vorgesehen, daß die Befestigungseinrichtung zur Befestigung der Halteeinrichtung wenigstens eine Fixiereinrichtung aufweist, mit der die Halteeinrichtung derart auf dem Träger fixierbar ist, daß der Meßwandler in direkten Kontakt mit dem Träger kommt. Als derartige Fixiereinrichtungen sind gemäß einer bevorzugten Weiterbildung der Erfindung z. B. Schrauben oder Bajonettverschlüsse vorgesehen.
Grundsätzlich ist es möglich, die Halterung des Meßwandlers in der Halteeinrichtung und die Befestigung der Halteeinrichtung an dem Träger auf eine derartige Weise vorzusehen, daß mit der Halterung des Meßwandlers in der Halteeinrichtung gleichzeitig auch die Befestigung der Halteeinrichtung an dem Träger verbunden ist. Gemäß einer bevorzugten Weiterbildung der Erfindung ist jedoch vorgesehen, daß die Halterung des Meßwandlers in der Halteeinrichtung von der Befestigung der Halteeinrichtung an dem Träger unabhängig ist. Auf diese Weise ist es nämlich möglich, die Halteeinrichtung von dem Träger abzunehmen bzw. zu entfernen, ohne daß die Halterung des Meßwandlers und damit dessen Ausrichtung verloren geht. Damit ist es gemäß einer bevorzugten Weiterbildung der Erfindung auch vorgesehen, daß die Halterung des Meßwandlers in der Halteeinrichtung bei der Bewegung der Halteeinrichtung weg von dem Träger bzw. auf den Träger zu und der Schwenkbewegung der Halteeinrichtung um die Schwenkachse erhalten bleibt.

Grundsätzlich ist die Erfindung für eine Vielzahl von Arten von Clamp-on-Meßgeräten einsetzbar. Gemäß einer bevorzugten Weiterbildung der Erfindung ist jedoch vorgesehen, daß der Träger von einem von einem Fluid durchströmbaren Rohr gebildet wird. Gemäß einer bevorzugten Weiterbildung der Erfindung ist dabei ferner vorgesehen, daß als Clamp-on-Meßgerät ein Clamp-on-Durchflußmeßgerät, vorzugsweise ein Clamp-on-Ultraschalldurchflußmeßgerät, vorgesehen ist.

Bei Clamp-on-Ultraschalldurchflußmeßgeräten ergibt sich nämlich der weiter oben beschriebene Vorteil, daß die Halteeinrichtung mit den darin befestigten Ultraschallwandlern kontrolliert von dem Meßrohr entfernt und derart verschwenkt werden kann, daß die dem Rohr ansonsten zugewandten Seiten der Ultraschallwandler zugänglich werden, so daß diese z. B. mit einem Kontaktfluid versehen werden können. Durch die Bewegung der Halteeinrichtung zurück auf das Rohr sind die Ultraschallwandler dann wieder in direkten Kontakt mit dem Rohr bringbar, so daß eine optimale Leitung des Ultraschallsignals von den Ultraschallwandlern in das Rohr hinein und von diesem zurück zu den Ultraschallwandlern gewährleistet werden kann.

Bei einem Clamp-on-Ultraschalldurchflußmeßgerät ist gemäß einer bevorzugten Weiterbildung der Erfindung schließlich auch noch vorgesehen, daß zwei von der Halteeinrichtung gehaltene und mit dem Rohr in direkten Kontakt bringbare Ultraschallwandler vorgesehen sind, die auf einer parallel zur Längsachse des Rohres verlaufenden Ausrichtungsachse im Abstand voneinander angeordnet sind, wobei wenigstens einer der Ultraschallwandler innerhalb der Halteeinrichtung längs der Ausrichtungsachse verschiebbar ist. Diese Verschiebbarkeit des Ultraschallwandlers ist dabei vorzugsweise derart ausgestaltet, daß der Ultraschallwandler innerhalb der Halteeinrichtung gelöst werden kann, um ihn zu verschieben, und danach wieder fixiert werden kann, so daß die erzielte Orientierung und Ausrichtung der Ultraschallwandler zueinander und relativ zum Rohr erhalten bleiben.

Im einzelnen gibt es nun eine Vielzahl von Möglichkeiten, das erfindungsgemäße Clamp-on-Meßgerät auszugestalten und weiterzubilden. Dazu wird auf die dem Patentanspruch 1 nachgeordneten Patentansprüche sowie auf die nachfolgende detaillierte Beschreibung eines bevorzugten Ausführungsbeispiels der Erfindung unter Bezugnahme auf die Zeichnung verwiesen.

In der Zeichnung zeigt
- Fig. 1: ein Clamp-on-Meßgerät gemäß einem bevorzugten Ausführungsbeispiel der Erfindung in einer Explosionsdarstellung,
- Fig.2a-d: schematisch die Anbringung des Clamp-on-Meßgeräts gemäß dem bevorzugten Ausführungsbeispiel der Erfindung und
- Fig. 3a-e: schematisch das Lösen der Halteeinrichtung des Clamp-on-Meßgeräts gemäß dem bevorzugten Ausführungsbeispiel der Erfindung zu Wartungszwecken.

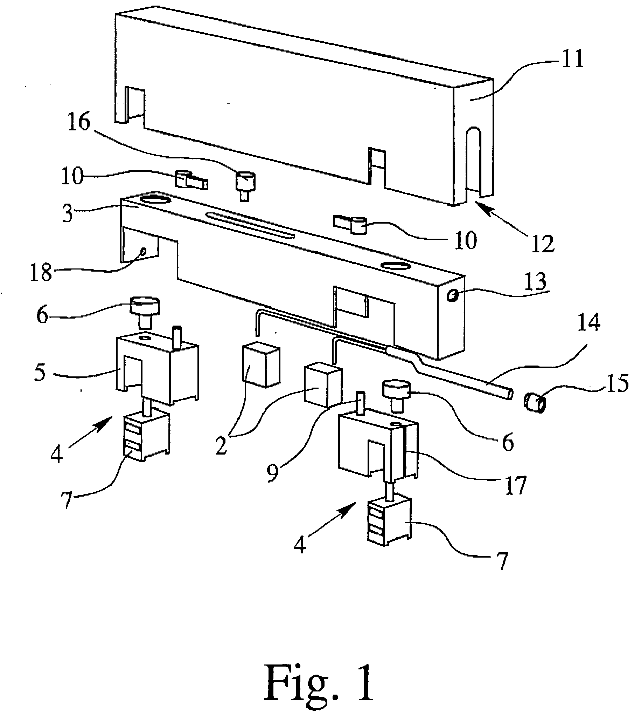

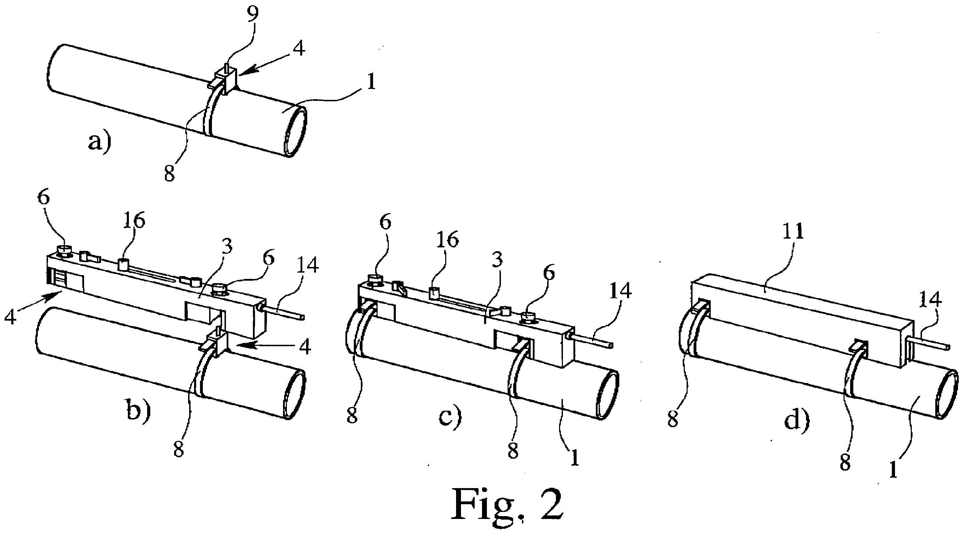

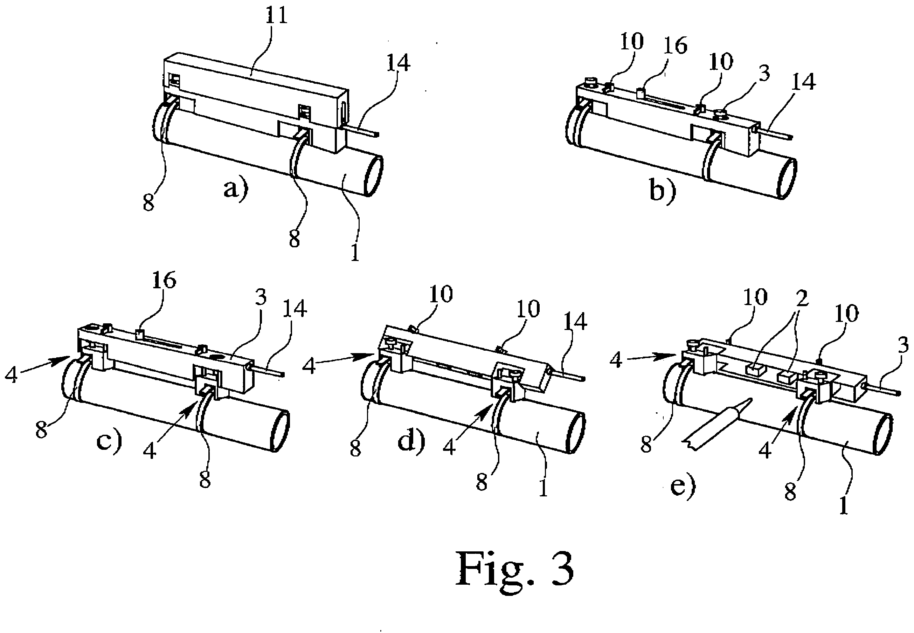

Fig. 1 ist als Clamp-on-Meßgerät gemäß einem bevorzugten Ausführungsbeispiel der Erfindung ein Clamp-on-Ultraschalldurchflußmeßgerät entnehmbar, das auf einem in den Fig. 2a-d und 3a-e entnehmbaren Rohr 1 als Träger befestigt werden kann. Das Clamp-on-Ultraschalldurchflußmeßgerät weist als Meßwandler zwei Ultraschallwandler 2, einen Führungsrahmen 3 als Halteeinrichtung zur Halterung der Ultraschallwandler 2 und zwei Befestigungseinrichtungen 4 zur Befestigung des Führungsrahmens 3 an dem Rohr 1 auf.

Die Befestigungseinrichtungen 4 weisen jeweils einen Grundkörper 5 auf, die jeweils mit einer Rändelmutter 6 auf einer Ratscheneinrichtung 7 befestigt sind. Wie insbesondere Fig. 2a entnehmbar, werden die Ratscheneinrichtungen 7 jeweils mit einem Befestigungsband 8 versehen, mit dem sie an dem Rohr 1 befestigt werden.

Der Führungsrahmen 3 ist derart ausgestaltet, daß er auf die auf dem Rohr 1 befestigten Befestigungseinrichtungen 4 aufgesetzt und an diesen befestigt werden kann. Dazu ist an den Grundkörpern 5 der Befestigungseinrichtungen 4 jeweils ein Stift 9 vorgesehen, der durch eine korrespondierende Öffnung in der Oberseite des Führungsrahmens 3 hindurchgeführt werden kann. Auf die durch den Führungsrahmen 3 hindurchragenden Stifte 9 kann dann jeweils ein Bajonettverschluß 10 aufgesetzt werden, so daß eine Fixierung des Führungsrahmens 3 auf der Befestigungseinrichtung 4, wie bei Bajonettverschlüssen üblich, mittels einer Drehung der Bajonettverschlüsse 10 auf den Stiften 9 erzielt werden kann.

Für das Clamp-on-Ultraschalldurchflußmeßgerät gemäß dem vorliegend beschriebenen bevorzugten Ausführungsbeispiel der Erfindung ist schließlich noch ein Gehäuse 11 vorgesehen, das die auf dem Rohr 1, installierten Einrichtungen abdeckt. Das Gehäuse 11 weist an einer seiner Seitenflächen eine Ausnehmung 12 auf, und der Führungsrahmen 3 weist an einer entsprechenden Seitenfläche eine Bohrung 13 auf, so daß durch die Ausnehmung 12 und die Bohrung 13 hindurch eine elektrische Zuleitung 14 zu den Ultraschallwandlern 2 geführt werden kann, die in der Bohrung 13 mittels einer Zugentlastung 15 gesichert ist.

Die Ultraschallwandler 2 sind innerhalb des Führungsrahmens 3 über eine Klemmhalterung gehalten. Das bedeutet, daß die Ultraschallwandler 2 in dem Führungsrahmen 3 dadurch befestigt sind, daß sie mit ihren Seitenflächen in Klemmpassung zwischen den langen Seitenflächen des Führungsrahmens 3 sitzen, so daß sie nicht ohne weiteres bewegt werden können. Für einen der beiden Ultraschallwandler 2 ist jedoch eine Einstellvorrichtung 16 vorgesehen, mit der dieser bei vom Rohr 1 gelöstem Gehäuse 11 von außerhalb des Führungsrahmens 3 in Längsrichtung desselben gegen die Klemmkraft verschoben werden kann. Auf diese Weise ist bei der Installation des Clamp-on-Ultraschalldurchflußmeßgeräts gemäß dem vorliegend beschriebenen bevorzugten Ausführungsbeispiel der Erfindung die optimale Position der Ultraschall-Wandler 2 zueinander festlegbar, nämlich die Position, bei der mittels auf der anderen Seite des Rohres 1 reflektierter Ultraschallsignale eine optimale Übertragung dieser von dem einen Ultraschallwandler 2 zu dem anderen Ultraschallwandler 2 gewährleistet ist.

Zur Installation des Clamp-on-Ultraschalldurchflußmeßgeräts gemäß dem vorliegend beschriebenen bevorzugten Ausführungsbeispiel der Erfindung auf dem Rohr 1 als Träger wird nun wie folgt vorgegangen:

Wie Fig. 2a entnehmbar, wird zuerst eine der Ratscheinrichtungen 7 mittels eines der Befestigungsbänder 8 auf dem Rohr 1 befestigt. Auf die Ratscheinrichtung 7 wird dann der Führungsrahmen 3 zusammen mit den restlichen, zuvor beschriebenen Einrichtungen des Clamp-on-Ultraschalldurchflußmeßgeräts, abgesehen vom Gehäuse 11, aufgesetzt. Durch Lösen der Bajonettverschlüsse 10 kann der Führungsrahmen 3 vom Rohr 1 abgehoben werden, so daß mittels der Einstellvorrichtung 16, wie zuvor beschrieben, einer der Ultraschallwandler 2 verschoben werden kann, um den optimalen Abstand der beiden Ultraschallwandler 2 voneinander zu ermitteln. Durch Feststellen der Bajonettverschlüsse wird danach der Führungsrahmen 3 wieder fest auf das Rohr 1 aufgedrückt, so daß auch die Ultraschallwandler 2 in direkten Kontakt mit dem Rohr 1 kommen. Um dabei eine optimale Leitung der Ultraschallsignale von den Meßwandlern 2 in das Rohr 1 und zurück zu gewährleisten, wird zwischen die dem Rohr 1 zugewandten Seiten der Ultraschallwandler 2 und dem Rohr 1 zuvor ein Kontaktfluid aufgebracht. Zum Schutz des Clamp-on-Ultraschalldurchflußmeßgeräts gemäß dem vorliegend beschriebenen bevorzugten Ausführungsbeispiel der Erfindung wird abschließend das Gehäuse 11 aufgesetzt. Das Clamp-on-Ultraschalldurchflußmeßgerät ist nun einsatzbereit.

Zu Wartungszwecken, nämlich zur Erneuerung des Kontaktfluids zwischen den Ultraschallwandlern 2 und der Außenseite des Rohres 1, können die dem Rohr 1 zugewandten Flächen der Ultraschallwandler 2 nun auf einfache Weise und insbesondere ohne die Ausrichtung der Ultraschallwandler aufzugeben, zugänglich gemacht werden. Dazu wird, wie den Fig. 3a-e entnehmbar, zuerst das Gehäuse 1 von dem Clamp-on-Ultraschalldurchflußmeßgerät abgenommen. Dann werden die Bajonettverschlüsse 10 gelöst, so daß der Führungsrahmen 3 relativ zu den Befestigungseinrichtungen 4 bewegbar wird. Eine Bewegung des Führungsrahmens 3 weg von dem Rohr 1 kombiniert mit einer Schwenkbewegung des Führungsrahmens 3 um eine parallel zur Längsachse und senkrecht zur Bewegung der Halteeinrichtung 3 weg vom Rohr 1 verlaufenden Schwenkachse wird nun auf folgende Weise ermöglicht:

Wie Fig. 1 entnehmbar, ist in den Außenseiten der Grundkörper 5 der Befestigungseinrichtungen 4 jeweils eine Nut 17 vorgesehen, die relativ zum Rohr 1 gesehen radial nach außen verläuft. In diesen Nuten 17 läuft nun jeweils eine Nase 18, die jeweils an der Innenseite der Endflächen des Führungsrahmens 3 vorgesehen sind. Auf diese Weise ist der Führungsrahmen 3 einerseits radial vom Rohr 1 weg bzw, zu diesem hin bewegbar, und andererseits ist aufgrund der runden Ausgestaltung der Nasen 18 auch eine Schwenkbewegung des Führungsrahmens 3 möglich, wie insbesondere den Fig. 3c und 3d entnehmbar. Durch das Abheben und Verschwenken des Führungsrahmens 3 werden die Unterseiten der Ultraschallwandler 2 zugänglich, so daß dort das Kontaktfluid erneuert werden kann, um weiterhin einen stabilen Betrieb des Clamp-on-Ultraschalldurchflußmeßgeräts bei gutem Signal-zu-Rausch-Verhältnis gewährleisten zu können.

## Patentansprüche

1. Clamp-on-Meßgerät, zum Anbringen auf einem Träger (1), mit wenigstens einem Meßwandler (2), einer Halteeinrichtung (3) zur Halterung des Meßwandlers (2) und einer Befestigungseinrichtung (4) zur Befestigung der Halteeinrichtung (3) an dem Träger (1), wobei die Halteeinrichtung (3) auf der Befestigungseinrichtung (4) aufsetzbar ist, wobei die Halteeinrichtung (3) an der Befestigungseinrichtung (4) derart befestigbar ist, daß die Halteeinrichtung (3) in wenigstens einer vorbestimmten Richtung vom Träger (1) weg bzw. auf den Träger (1) zu bewegbar und längs einer Schwenkachse verschwenkbar ist,
wobei die Halteeinrichtung (3) und die Befestigungseinrichtung (4) derart ausgebildet und angeordnet sind und der Meßwandler (2) in der Halteeinrichtung (3) derart gehalten ist, daß durch die Bewegung der Halteeinrichtung (3) weg von dem Träger (1) kombiniert mit der Schwenkbewegung der Halteeinrichtung (3) um die Schwenkachse die zuvor dem Träger (1) zugewandte Seite des Meßwandlers (2) zugänglich wird,
wobei die Halteeinrichtung (3) und die Befestigungseinrichtung (4) zueinander korrespondierende Einrichtungen aufweisen, um die Bewegung der Halteeinrichtung (3) weg von dem Träger (1) bzw. auf den Träger (1) zu und die Schwenkbewegung der Halteeinrichtung (3) um die Schwenkachse zu gewährleisten,
wobei in der Halteeinrichtung (3) bzw. der Befestigungseinrichtung (4) eine in der vorbestimmten Richtung verlaufende Nut (17) und in der Befestigungseinrichtung bzw, der Halteeinrichtung (3) eine in die Nut (17) eingreifende Nase (18) vorgesehen sind, um die Bewegung der Halteeinrichtung (3) weg von dem Träger (1) bzw. auf den Träger (1) zu und die Schwenkbewegung der Halteeinrichtung (3) um die Schwenkachse zu gewährleisten,
wobei die Nut (17) vom Träger (1) radial nach außen verläuft und wobei die Nase (18) zur Gewährleistung der Schwenkbewegung der Halteeinrichtung (3) um die Schwenkachse rund ausgestaltet ist.

2. Clamp-on-Meßgerät nach Anspruch 1, **dadurch gekennzeichnet, daß** die Befestigungseinrichtung (5) zur Befestigung der Halteeinrichtung wenigstens eine Fixiereinrichtung aufweist, mit der die Halteeinrichtung derart auf dem Träger fixierbar ist, daß der Meßwandler in direkten Kontakt mit dem Träger kommt.

3. Clamp-on-Meßgerät nach Anspruch 1 oder 2, **dadurch gekennzeichnet, daß** der Träger von einem von einem Fluid durchströmbaren Rohr (1) gebildet wird.

4. Clamp-on-Meßgerät nach Anspruch 3, **dadurch gekennzeichnet, daß** als Clamp-on-Meßgerät ein Clamp-on-Durchflußmeßgerät, vorzugsweise ein Clamp-on-Ultraschalldurchflußmeßgerät, vorgesehen ist, daß als Meßwandler ein mit dem Rohr (1) in direkten Kontakt bringbarer Ultraschallwandler (2) vorgesehen ist und daß zwei von der Halteeinrichtung gehaltene und mit dem Rohr (1) in direkten Kontakt bringbare Ultraschallwandler (2) vorgesehen sind, die auf einer parallel zur Längsachse des Rohres (1) verlaufenden Ausrichtungsachse im Abstand voneinander angeordnet sind, wobei wenigstens einer der Ultraschallwandler (2) innerhalb der Halteeinrichtung längs der Ausrichtungsachse verschiebbar ist.

5. Clamp-on-Meßgerät nach einem der Ansprüche 1 bis 4, **dadurch gekennzeichnet, daß** die Schwenkachse in einem Winkel zu der vorbestimmten Richtung der Bewegung der Halteeinrichtung weg von dem Träger bzw. auf den Träger zu verläuft, vorzugsweise senkrecht dazu, ganz besonders bevorzugt auch parallel zur Längsachse der Halteeinrichtung.

## Claims

1. Clamp-on measurement device, for attachment to a support (1), comprising at least one instrument transformer (2), a retaining means (3) for holding the instrument transformer (2), and a fastening means (4) for attachment of the retaining means (3) to the support (1), wherein the retaining means (3) is attachable to the fastening means (4) in a manner enabling the retaining means (3) to be movable in at least one predetermined direction toward and away from the support (1) and to pivot about a pivot axis,
wherein the retaining means (3) and the fastening means (4) are designed and arranged and the instrument transformer (2) is held in the retaining means (3) such that the side of the instrument transformer (2) previously facing the support (1) is made accessible due to the movement of the retaining means (3) away from the support (1) combined with the pivoting movement of the retaining means (3) around the pivot axis,
wherein the retaining means (3) and the fastening means (4) have devices corresponding to one another in order to ensure the movement of the fastening means (4) away from the support (1) or, respectively, to the support (1) and to ensure the pivoting movement of the retaining means (3) around the pivot axis,
wherein a groove (17) is provided in the retaining means (3) or the fastening means (4) that runs in the predetermined direction and a projection (18), that engages the groove (17) is provided on the other of the fastening means (4) or the retaining means (3) to ensure the movement of the retaining means (3) away from the support (1) or, respectively, to the support (1) and to ensure the pivoting movement of the retaining means (3) around the pivot axis, wherein the groove (17) runs radially outward from the support (1) and wherein the projection (18) is is designed around the pivot axis in order to ensure the pivoting movement of the retaining means (3).

2. Clamp-on measurement device according to claim 1, **characterized in that** the fastening means (4) has at least one fixing means for attaching the retaining means on the support such that the instrument transformer comes into direct contact with the support.

3. Clamp-on measurement device according to claim 1 or 2, **characterized in that** the support is formed by a pipe (1) through which a fluid can flow.

4. Clamp-on measurement device according to claim 3, **characterized in that** a clamp-on flow rate measurement device, preferably a clamp-on ultrasonic flow rate measurement device, is provided as clamp-on measurement device, that an ultrasonic transducer (2) that can be brought into direct contact with the pipe (1) is provided as instrument transformer, and that two ultrasonic transducers (2) that can be brought into direct contact with the pipe (1) and that are held by the retaining means are provided and arranged on an alignment axis running parallel to the longitudinal axis of the pipe (1) at a distance from one another, wherein at least one of the ultrasonic transducers (2) can be shifted along the alignment axis within the retaining means.

5. Clamp-on measurement device according to any one of claims 1 to 4, **characterized in that** the pivot axis runs away from the support or, respectively, toward the support at an angle to the predetermined direction of motion of the retaining means, preferably perpendicular to it, particularly pref erably also parallel to the longitudinal axis of the retaining means.

## Revendications

1. Appareil de mesure à pince, à installer sur un support (1), avec au moins un transformateur de mesure (2), un dispositif de maintien (3) pour maintenir le transformateur de mesure (2) et un dispositif de fixation (4) pour la fixation du dispositif de maintien (3) sur le support (1), dans lequel le dispositif de maintien (3) peut être posé sur le dispositif de fixation (4), dans lequel le dispositif de maintien (3) peut être fixé au dispositif de fixation (4) de telle manière que le dispositif de maintien (3) puisse se déplacer dans au moins une direction prédéterminée vers le support (1) et en sens inverse et pivoter le long d'un axe de pivotement,
dans lequel le dispositif de maintien (3) et le dispositif de fixation (4) sont configurés et disposés et le transformateur de mesure (2) est maintenu dans le dispositif de maintien (3) de telle manière que par le mouvement du dispositif de maintien (3) s'écartant du support (1) combiné avec le mouvement de pivotement du dispositif de maintien (3) autour de l'axe de pivotement le côté du transformateur de mesure (2) antérieurement tourné vers le support (1) soit accessible,
dans lequel le dispositif de maintien (3) et le dispositif de fixation (4) présentent des dispositifs se correspondant mutuellement, afin de garantir le mouvement du dispositif de maintien (3) vers le support (1) et en sens inverse et le mouvement de pivotement du dispositif de maintien (3) autour de l'axe de pivotement,
dans lequel il est prévu dans le dispositif de maintien (3) ou le dispositif de fixation (4) une rainure (17) s'étendant dans la direction prédéterminée et dans le dispositif de fixation ou le dispositif de maintien (3) un ergot (18) s'engageant dans la rainure (17), afin de garantir le mouvement du dispositif de maintien (3) vers le support (1) et en sens inverse et le mouvement de pivotement du dispositif de maintien (3) autour de l'axe de pivotement,
dans lequel la rainure (17) s'étend radialement vers l'extérieur à partir du support (1) et dans lequel l'ergot (18) destiné à garantir le mouvement de pivotement du dispositif de maintien (3) autour de l'axe de pivotement est de forme ronde.

2. Appareil de mesure à pince selon la revendication 1, **caractérisé en ce que** le dispositif de fixation (5) pour la fixation du dispositif de maintien présente au moins un système de fixation, avec lequel le dispositif de maintien peut être fixé sur le support de telle manière que le transformateur de mesure vienne directement en contact avec le support.

3. Appareil de mesure à pince selon la revendication 1 ou 2, **caractérisé en ce que** le support est formé par un tube (1) pouvant être parcouru par un fluide.

4. Appareil de mesure à pince selon la revendication 3, **caractérisé en ce qu'**il est prévu comme appareil de mesure à pince un débitmètre à pince, de préférence un débitmètre à ultrasons à pince, **en ce qu'**il est prévu comme transformateur de mesure un transducteur d'ultrasons (2) pouvant être mis en contact direct avec le tube (1) et **en ce qu'**il est prévu deux transducteurs d'ultrasons (2) maintenus par le dispositif de maintien et pouvant être mis en contact direct avec le tube (1), qui sont disposés à distance l'un de l'autre sur un axe d'alignement s'étendant parallèlement à l'axe longitudinal du tube (1), dans lequel au moins un des transducteurs d'ultrasons (2) est déplaçable à l'intérieur du dispositif de maintien le long de l'axe d'alignement.

5. Appareil de mesure à pince selon l'une quelconque des revendications 1 à 4, **caractérisé en ce que** l'axe de pivotement s'étend sous un angle par rapport à la direction prédéterminée du mouvement du dispositif de maintien vers le support ou en sens inverse, de préférence perpendiculairement à celui-ci, de préférence encore parallèlement à l'axe longitudinal du dispositif de maintien.
